Europäisches Patentamt

European Patent Office

Office européen des brevets

(11) Publication number: **0 667 513 A1**

## EUROPEAN PATENT APPLICATION
### published in accordance with Art. 158(3) EPC

(21) Application number: **94912561.1**

(22) Date of filing: **12.04.94**

(86) International application number:
**PCT/ES94/00038**

(87) International publication number:
**WO 94/24533 (27.10.94 94/24)**

(51) Int. Cl.⁶: **G01K 11/06**, G01K 3/04

(30) Priority: **13.04.93 ES 9300755**

(43) Date of publication of application:
**16.08.95 Bulletin 95/33**

(84) Designated Contracting States:
**AT BE DE FR GB IT NL PT**

(71) Applicant: **TECNICAS DE CONTROL ALIMENTARIO, S.L.**
**Betis, 41**
**ES-41010 Sevilla (ES)**

(72) Inventor: **TECNICAS DE CONTROL ALIMENTARIO, S.L.**
**Betis, 41**
**ES-41010 Sevilla (ES)**

(74) Representative: **Ungria Lopez, Javier et al**
**Avda. Ramon y Cajal, 78**
**E-28043 Madrid (ES)**

(54) **METHOD AND APPARATUS FOR DETECTING THE DEFROSTING AND THE RELATIVE CONSERVATION STATES OF PERISHABLE PRODUCTS.**

(57) The method is based on the principle that when the organic control of a body is stopped, and the latter dies, the various chemical substances compounding such body interact between each other, breaking the prior equilibrium and producing new substances, thereby leading to its deterioration, as a function of time and depending on its chemical composition. The effective conservation status is comparable with the empirical time to which we are accustomed, with the quantity of a reaction product, with control reactants, which have gone through the same temperature phases. An apparatus comprises a hollow body (20) which holds a totally packaged water volume (21) and also a coloring reactant (23) at some distance from the former; in the frosting process of the product to be controlled, when the packaged water volume increases due to the ice transformation, the package (21) is partially broken and the subsequent temperature increase causes the melting of the ice which is irreversibly colored.

FIG.1

OBJECT OF THE INVENTION

As is expressed in the title of this specification, the present invention refers to a method and apparatus for detecting the defrosting and the relative conservation states of perishable products, providing a series of relevant and advantageous features that make it possible to clearly establish the state in which perishable products are in, these being disposable apparatus.

When the organic control of a body stops and dies, the different chemical substances that compound it, interact between each other, breaking the prior equilibrium and producing new substances, thereby leading to the loss of the original characteristics and deterioriation thereof. Normally upon freezing it, the conservation thereof for the maximum amount of time without the modification of its organoleptic qualities is sought, and upon defrosting it, that the senses can perceive it just like it was before the freezing process.

In a chemical reaction the breaking of the molecular bonds present in the products that react and the formation of other new reaction products is essential. In order for this to be possible it is necessary that the molecules interact effectively, in other words, with minimum activation kinetic energy and a suitable orientation.

The rate of any chemical reaction is related to the amount of impacts between the molecules, or what is the same, to the molecular kinetic energy or temperature.

Normally, we relate the deterioriation of a dead organism in terms of time and we know empirically that some bodies deteriorate more rapidly than others, depending on their chemical composition, those at the same rate they are of the same nature.

This way of evaluating the deterioration by the amount of time that has gone by is logical, since we live at a temperature and atmospheric pressure that change slightly, which makes us accustomed to seeing chemical reactions in identical products and at room temperature, always having the same rates.

BACKGROUND OF THE INVENTION

Presently no methods nor apparatus to reliably detect the degree of defrosting and the relative conservation states of perishable products are known.

DESCRIPTION OF THE INVENTION

In broad outline, the method for detecting the defrosting and the relative conservation states of perishable products, that constitutes part of the object of the invention, is based on the following:

The method for measuring the relative conservation or deterioration time of perishable products consists of comparing the amount of reaction product of some reagents subjected to the same temperatures as the product to be controlled, with the reaction product of other identical reagents and that reacted at a set determined temperature, considered boom temperature ($25^{\circ}$ C and at one atmosphere of pressure) whereby each amount of control reaction product will correspond to a standard reaction time. As the set temperature for the standard reaction is considered room temperature, the apparatus will be gaged in days, weeks, months... This gives us some objective and quantifiable measurements, which can also be carried over to our daily experience.

The amount of this product would be proportional to the conservation states, hence the reaction rates would be common.

This dependence is expressed empirically by Arrhenius' formula, for the reaction rate constant

$$k = A \exp\left(-E^{\ddagger}/RM\right), \qquad (1)$$

wherein $E_{\ddagger}^{+}$ is the activation energy that characterizes the energy barrier that the system must overcome in order to carryout the reaction. The dependence between K and $E_{\ddagger}^{+}$/RT is inferred from the Boltzmann distribution for energies, the exponent indicates the part of molecules that have enough energy $E_{\ddagger}^{+}$ for the reaction. The constants k determine the reaction rates. In the reversible reactions

$$\overrightarrow{v} = k_1[A], \quad \overleftarrow{v} = k_1[B]. \qquad (2)$$

(wherein [A,][B] are the concentrations)

In the equilibrium

$$\overrightarrow{v} = \overleftarrow{v}$$

and the equilibrium constant is

$$K = \frac{[B]_{eq}}{[A]_{eq}} = \frac{k_1}{k_{-1}} \, . \tag{3}$$

The subindex eg means the balanced concentration. The difference of the free energies of the initial reaction products and reagents is equal to

$$\Delta G = -RT \ln K = \Delta H - T\Delta S, \tag{4}$$

wherein $\Delta H$ is the difference of the enthalpies, $\Delta S$ the difference of the enthropies. The reaction is only possible if $\Delta G < O$, in other words, if the free energy is reduced. However, this condition is necessary, but it is not yet enough for the reaction. The activation energy $E_+^{\ddagger}$ can be so great, that the rate constant is insignificantly small and the reaction does not take place.

The meaning of Arrhenius' formula is discovered in the theory of reaction rates (the theory of the transition state or of the activated complex) proposed by Eyring.

It is assumed that the progress of the reaction neither infringes the Boltzmann distribution of the molecules according to their states with different energy. The development of the reaction requires the energy barrier to be overcome.

We find the number of systems that are in a certain interval $d$ of the reaction coordinate $\check{3}$ at the peak of the barrier. The reaction rate is the number of systems that exceed the barrier in the time unit. The average rate of the movement of the system is equal to

$$\overline{v} = \frac{\int_0^\infty v \exp \left(-mv_2/2kT\right) dv}{\int_0^\infty \exp \left(-mv^2/2kT\right) dv} = \left(\frac{kT}{2\pi m}\right)^{1/2} . \tag{5}$$

In the present invention we use the Maxwell-Boltzmann distribution according to the kinetic energies $mv^2/2$. The reaction rate, in other words the number of transitions through the barrier in the time unit is equal to

$$v = \frac{c'}{\delta} \overline{v} = \frac{c'}{\delta} \left(\frac{kT}{2\pi m}\right)^{1/2} , \tag{6}$$

wherein c is the number of systems in the volume unit that is found between the limits of segment $\delta$. Meanwhile

$$V = kC_A C_B \dots , \tag{7}$$

wherein $c_A$, $C_B$ ... are the concentrations of the reagents. From formula (6) and (7) it is inferred that

$$k = \frac{c'}{c_A c_B \ldots} \left( \frac{kT}{2\pi m} \right)^{1/2} \frac{1}{\delta} = K' \left( \frac{kT}{2\pi m} \right)^{1/2} \frac{1}{\delta} . \qquad (8)$$

Here K' is the equilibrium constnat for the passing or the reagents A, B, ... in the activation state. The equilibrium constant is expressed by the statistical sum

$$Z = \sum_i \exp \left( -E_i / kT \right) , \qquad (9)$$

wherein $E_i$ is the energy of the i-th state of the system. The addition is carried out by all of the states. In our case

$$K' = \frac{Z_{c \cdot a}}{Z_A Z_B \ldots} , \qquad (10)$$

wherein $Z_{c.a.}$, $Z_A$, $Z_B$ are the statistical sums for the activated complex (state) and the reagents A, B ... correspondingly.

For the displacement of the particle, the group of states is continuous, the sum (9) is replaced by the integral which is equal to

$$Z_{tras} = \delta^3 \left( \frac{2\pi m kT}{h^2} \right)^{3/2} , \qquad (11)$$

wherein h is the Planck constant, m is the mass of the particle.

We have admitted the volume occupied by the particles, equal to $\delta^3$; $Z_{tras}$ is the statistical sum according to the three degrees of freedom of displacement. But since the system only has one of these degrees of freedom, in other words, along the direction of the reaction, we obtain

$$Z_{c \cdot a} = Z'_{c \cdot a} \delta \left( \frac{2\pi m kT}{h^2} \right)^{1/2} , \qquad (12)$$

wherein $Z'_{c.a.}$ is the statistical sum of the activated complex according to all of the degrees of freedom, with the exception of that of displacement, from formulae (8), (10) (12) we obtain

$$k = \frac{kT}{h} \frac{Z'_{c \cdot a}}{Z_A Z_B \ldots} . \qquad (13)$$

The condition length $\delta$ was reduced. The statistical quantities are directly linked to the thermodynamic quantities.

We have

$$Z = \exp(-G/RT) \tag{14}$$

and therefore,

$$k = \frac{kT}{h} \frac{\exp(-G'/RT)}{\exp(-G_A/RT)\exp(-G_B/RT)\ldots} = \tag{15}$$

$$= \frac{kT}{h}\exp\left(-\frac{G'-G_A-G_B-\ldots}{RT}\right) = \frac{kT}{h}\exp\left(-\frac{G^{\ddagger}}{RT}\right).$$

Here $G^+$ is the excess of free energy of the activated group in comparison with the total free energy of the reagents, in other words, the free activation energy.

Upon working out the expression (15) it was assumed that the system necessarily underwent chemical transformation upon reaching the activation barrier. This also may not occur.

Introducing a complementary factor, the displacement coefficient x<1, we finally obtain the expression for the rate constant of the homogenous gaseous reaction, Eyring formula:

$$k = \chi \frac{kT}{h}\exp(S^{\ddagger}/R)\exp(-H^{\ddagger}/RT); \tag{16}$$

wherein $S_+^{\ddagger}$ is enthropy, $H_+^{\ddagger}$ is the activation enthalpy. The value x = 1 corresponds to the adiabatic development of the reaction, in other words, to the process in which the parameters of the mechanical system vary slowly. In the chemical reaction, such parameters are positions of the atomic groups. For each conformation of the nuclei, the electrons are arranged in such a way as if the nuclei were to remain still. If the process is adiabetic, $x \ll 1$ and the values of the order $10^{-5}$ can be taken.

In the gaseous reactions, the observed values of x, to a large extent are close to l, in other words, these reactions are carried out adiabatically.

The factor kT/h for common temperatures has the order of $10^{13}$ s$^{-1}$.

Let us compare Eyring's formula (16) with Arrhenius' formula (1). If we identify the enthalpy and the activation energy, then, the factor before the exponential one will be equal to

$$A = \chi \frac{kT}{h}\exp(S^{\ddagger}/R). \tag{17}$$

The values of the activation parameters are determined by the dependence of the temperature of k. For x = 1 we have

$$\ln k = \frac{S^{\ddagger}}{R} + \ln\frac{kT}{h} - \frac{H^{\ddagger}}{RT}. \tag{18}$$

The second addend depends slightly on T and it can be disdained. We obtain a linear dependence between ln k and l/T.

By the gradient of the straight line, we find $H_+^{\ddagger}$, by the segment, cut in the ordinate axis, we determine $S_+^{\ddagger}$. The non-linearity of the dependence between ln k and $T^{-1}$ attest to the complication of the process, in particular, to its cooperativeness. In such process the free activation energy is not constant, but it depends

EP 0 667 513 A1

on the number of systems that already reacted and therefore on T.

In accordance with this invention, an apparatus for detecting defrosting has been conceived. It is based on the unique physical properties that water has, that at a temperature of $0_o$ C and at the normal pressure of one atmosphere, its molecules rearranged, changing its state from a liquid to a solid. As ice is a solid that is not very compressible, any body that holds it, without having great breaking strength, would break. If inside a hollow body we place a certain portion of packaged water, the water would solidify in the freezing process, upon the apparatus connecting to the product that is to be controlled. In this hollow body there is also a coloring reactant separated somewhat from the package of water. When the ice melts and the ice causes the package to partially break, as a result of the temperature having gone up, the coloring reactant is irreversibly colored.

A manually operated apparatus to observe the relative conservation states by color change , based on the proportional relation that exists between the temperature and the chemical reaction rate, and on the property that some bodies have, in solution, of changing color when a specific concentration fringe of an element, has also been conceived. This apparatus includes a transparent wrapper in which several reagents and an independent chemical indicator are located, there also being an element that is activated from the outside to put these substances in communication. When this apparatus is attached to the product to be controlled and the means that keep these substances isolated are removed, when the chemical reaction reaches a specific concentration level of an element, the indicator causes a color change. According to the method this impies that a specific empirical period of time has gone by and therefore the product has undergone deterioration relative to the temperature considered room temperature.

In accordance with the invention it is also possible to observe the relative conservation states by gaseous volumetry, being based on the proportional relation that exists between the temperature and chemical reaction rate, and on the properties of gases. The apparatus has two bodies connected to each other, in one of which there are isolated reagents and the other is materialized by a small contrasted tube, with the volumes that the reagents themselves produce, at the temperature considered as room temperature, and in specific times, inside of which an indicative ram moves. Once the apparatus has been fixed to the product that is to be controlled, and the reagents in contact, it will suffice to look at the contrast mark that the ram indicates, to know the relative conservation time, according to the method.

We can also have an automatic apparatus to detect defrosting, at a specific temperature, and the relative conservation states, by one or several color changes. It is based on the physical properties of water and on the proportional relation that exists between the chemical reaction rate with temperature and with the concentration of the reagents and also with the property that some products in solution have, of causing a color change, when a specific concentration fringe of an element is reached. It consists of a hollow transparent body inside of which and with a certain amount of play there is a portion of water packaged by a product not very resistant to breaking, the water also being able to contain, some dissolved chemical product, to achieve a molar concentration that determines the specific solidification and melting temperature, and also somewhat separated, a chemical indicator of color change and one or several independent reagents and that could also have different concentrations. Once this apparatus is attached to the product to be controlled, as the volume increases in the freezing process, due to the change of state of water, the partial breaking of the package is caused, whereby as the temperature rises the ice converts into water the reagents dissolving that thus come in contact with the chemical indicator, until the concentration of the specific product is reached and the color change or changes take(s) place, depending on the time interval in the changes of the concentration of the reagents.

Finally, an automatic apparatus for detecting defrosting and the relative conservation states by gaseous volumetry is also considered. It is based on the physical properties of water, on the proportional relation that exists between temperature and the chemical reaction rates and on the properties of gases. This apparatus also includes two hollow parts that are interconnected. In one of them there is water totally packaged by a product not very resistant to breaking, and somewhat separated other independent reagents. The other part of the apparatus is materialized by a contrasted tube, with the volumes that the reagents themselves produce, at the temperature considered room temperature, and in specific time periods, with an indicative ram. Once the apparatus is attached to the product to be controlled, in the freezing process, the water manages to convert into ice and the partial breaking of the package takes place, which then permits as the temperature rises, the ice to convert into water, the reagents managing to interact, producing a gaseous element that moves the indicative ram as the volume increases. It will suffice to look at the contrast mark that the ram indicates, to know the relative conservation time, according to the method.

In order to provide a better understanding of the features of the invention and forming an integral part of this specification, a sheet of drawings in whose figures, the following has been represented in an illustrative and non-restrictive manner, is attached hereto.

BRIEF DESCRIPTION OF THE DRAWINGS

Figure 1 is a schematic view of an apparatus for detecting defrosting, in accordance with the invention.

Figure 2 is a schematic view of a hand-operated apparatus to observe the relative conservation states of a perishable product, by a color change of an indicator, in a specific relative time period.

Figure 3 is a schematic view of a hand-operated apparatus that indicates the relative conservation states of a perishable product, by gaseous volumetry.

Figure 4 is a schematic view of an automatic apparatus for detecting defrosting and the relative conservation states of a perishable product, by the color change of an indicator in a relative specific period of time.

Figure 5 is a schematic view of an automatic apparatus that detects defrosting and shows the relative conservation states of a perishable product, by gaseous volumetry.

DESCRIPTION OF THE PREFERRED EMBODIMENT

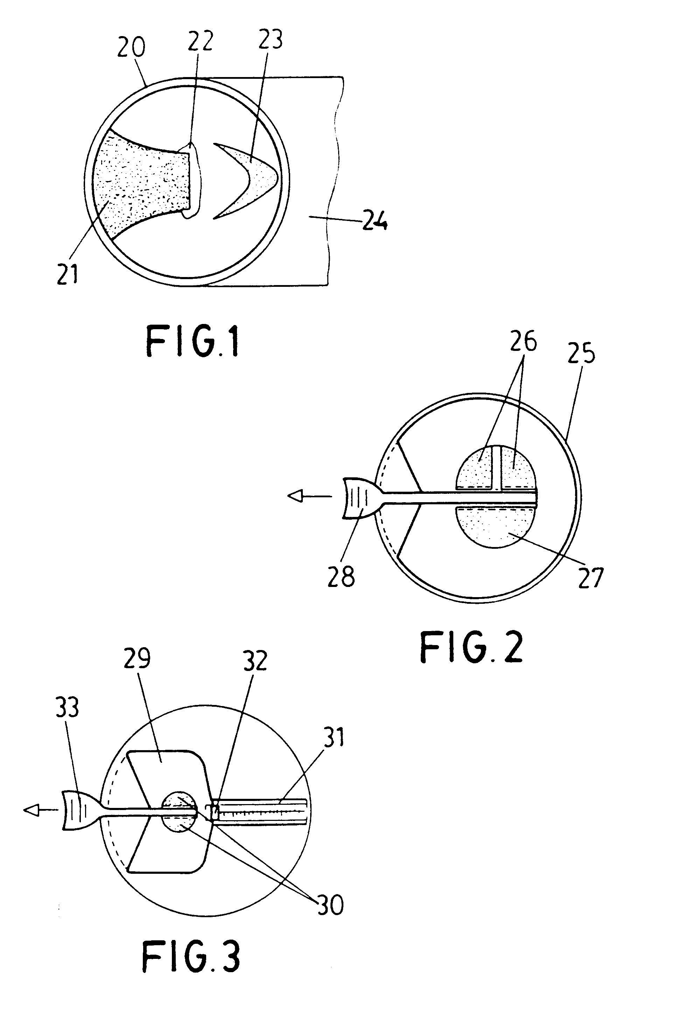

Making reference to the numbering used in the figures, we can see that, with special relation to figure 1, an apparatus that schematically consists of a hollow transparent plastic type body (20), which inside it has a portion of water contained in a package (21) not very resistant to breaking, having a fragile breakage and ovewflow area, referred to as (22.) Inside the hollow body (20) there is also a coloring reactant (23) placed strategically separated from the package (21) of water. The water can also include some dissolved substance that modifies its molar concentration.

As we have said above, once the apparatus is attached to the product to be controlled, in the freezing process as the volume of packaged water increases due to the conversion thereof into ice, the partial breaking of the package is caused, precisely at the breakage and overflow area (22) and that due to the special shape of the hollow body (20), the ice remains immobilized. As the temperature rises the ice converts into water which will be colored irreversibly upon coming in contact with the coloring reactant (23.)

In figure 2 we can see an apparatus for showing the relative conservation states by a color change, schematically consisting of a plastic type transparent wrapper (25), which inside it has several reagents (26) and the chemical indicator (27), packaged independently and that can be voluntarily freed from the outside, pulling a pulling strip (28) that breaks the packages. When this apparatus is attached to the product to be controlled, once the pulling strip (28) has been removed, when the chemical reaction reaches a specific level of concentration of an element, the indicator causes the color change, which reveals that a specific empiric period of time has gone by, irrespective of the temperatures that this product to be controlled has been subjected to, and as we have said above it can be shown that the product has undergone a deterioration at room temperature, just like at the time indicated in the apparatus when this color change has taken place.

The apparatus shown in figure 3 serves to observe the relative conservation states by gaseous volumetry, extensively explained above and in which we see that it is comprised schematically of two bodies that are inter-connected, one of them referred to as (29) that contains inside it the isolated packaged reagents (30), and the other body, referred to as (31) that consists of a small contrasted tube with the volumes that the reagents themselves produce, at the temperature considered room temperature, and in specific time periods, with an indicative ram (32). Upon removing the pulling strip (33) the reagents are released and the reaction begins. It will suffice to look at the contrast mark that the ram indicates, to know the relative conservation time, according to the method.

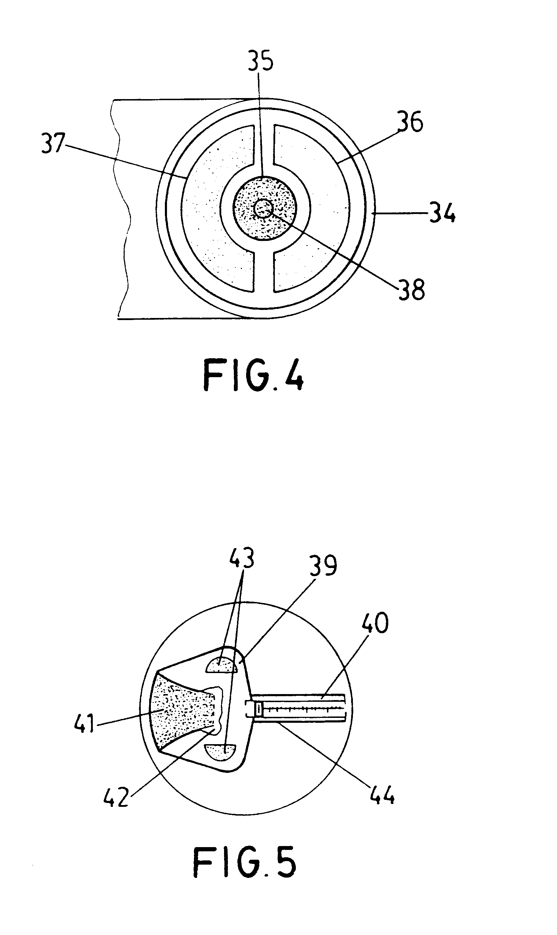

In figure 4 we see an apparatus for detecting defrosting and the relative conservation states by a color change. The plastic type hollow transparent body (34) contains inside it and with a certain amount of play the water (35) packaged by a product not very resistant to breaking, being located somewhat separated and independent some tissues (36) and (37) impregnated with the chemical indicator and different concentrations of the chemical reagents in the case shown in figure 4. The water can contain some dissolved substance. The breakage and overflow area is referred to as (38.) Similar to what has been explained in relation to figure 1, after causing the partial breaking of the package as the water converts into ice, when the temperature rises it melts again the reagents contained in the fringes (36) and (37) dissolving, the reaction beginning, until the specific concentration of the reaction product has been reached and the color changes are produced.

As we have already explained above, an apparatus for detecting defrosting and the relative conservation states by gaseous volumetry is also provided for. We can see this in figure 5, being based on the physical properties of water and on the proportional relation that exists between temperature and the chemical reaction rate, as well as on the properties of gases. It schematically consists of two hollow parts (39) and (40), that are interconnected, one of which contains one portion of water (41) packaged by a product not very resistant to breaking and somewhat separated from the breakage and overflow area (42) there are several independent reagents (43.) The other hollow part (40) defines a contrasted tube, with an indicative ram (44.) The water can contain some dissolved substance and in the freezing process, upon this apparatus attaching to the product to be controlled, just as we have seen in relation to figures 1 and 4, upon the water converting into ice the partial breaking of the package is caused. The package has a special shape to immobilize the ice, so that as the temperature rises and the ice melts, it interacts with the reagents producing a gaseous element that moves the indicative ram as its volume increases, just as in the case explained with regard to figure 3.

**Claims**

1. Method for detecting the defrosting and the relative conservation states of perishable products, based on the fact that when the organic control of a body stops and dies, the different chemical substances that comprise it interact with each other, breaking the prior equilibrium and producing new substances, which implies the loss of its original characteristics and deterioration, this normally being a function of the time that is in turn variable depending on its chemical composition and having the same rate for the bodies of the same nature, characterized in that in order to express the real conservation states of a body after it has been subjected to different temperatures, at the empirical time that we are accustomed to, it suffices to be able to compare the amount of reaction product of some reagents subjected to the same temperatures as the product to be controlled, with the reaction product of other identical reagents and that reacted at a set and specific temperature, considered as room temperature and at the same pressure, whereby at each amount of control reaction product, a standard reaction time will correspond; as the temperature set for the standard reaction is the temperature considered as room temperature, the apparatus making the normal use time, which gives us some objective and quantifiable measurements and that are carried over to our daily experience.

2. Apparatus for detecting the defrosting of perishable products, characterized in that it includes a hollow transparent body (20), inside of which and with a certain amount of play it has a portion of water totally packaged (21) by a product not very resistant to breaking and also a coloring reactant (23) somewhat separated from the package of water (21), the water being able to contain some dissolved substance, this apparatus attached to the product to be controlled, in the freezing process, whereby as the volume of the packaged water increases upon freezing and converting into ice, the partial breaking of the package (21) is caused, determining that if later on the temperature rises, the ice melts at a specific temperature and it is irreversibly colored upon reacting with the color reactant (23.)

3. Apparatus for observing the relative conservation states of a perishable product, based on the proportional relation that exists between the temperature and the chemical reaction rate and on the property that some dissolved bodies have upon changing color when they reach a specific concentration fringe of an element, characterized in that it includes a transparent wrapper (25) which inside it has several reagents (26) and a chemical indicator (27), packaged independently but capable of coming in contact with each other, activated from the outside; this apparatus attaching to the product to be controlled and pulling the pulling strip (28), whereby when the chemical reaction reaches a specific concentration level of an element, the indicator causes the color change.

4. Apparatus for observing the relative conservation states of a perishable product, based on the proportional relation that exists between the temperature and the chemical reaction rate, and on the properties of the gases, characterized in that it comprises two hollow bodies (29, 31) in contact with each other, one of which (29) contains packaged reagents (30), isolated by a removable tongue or pulling strip (33), while the other body (31) is comprised of a small contrasted tube, with an indicative ram (32) inside it; this apparatus attaching to the product to be controlled and pulling the pulling strip (33), so that contrasting the tube with the volumes that the same reagents produce, at the temperature considered to be room temperature, and in specific time periods, it will suffice to look at the contrast mark to know the relation conservation time, according to the method.

5. Apparatus for detecting the defrosting and the relative conservation states of perishable products, based on the physical properties of water and on the proportional relation that exists between the chemical reaction rate with the temperature and the concentration of the reagents, as well as on the properties that some dissolved bodies have of changing color, when they reach a specific concentration fringe of an element, characterized in that it consists of a transparent hollow body (34), which inside it and with a certain amount of play has a portion of water (35) packaged by a product not very resistant to breaking and also somewhat separated some independent chemical indicators (36 and 37) with different reagent concentrations, the water being able to contain some dissolved substance; the apparatus attached to the product to be controlled, in the freezing process, upon the volume of packaged water (35) increasing upon converting into ice, causing the partial breakage of the package, determining that if the temperature rises the ice melts, the indicators and reagents (36 and 37) dissolving, until they reach the concentration of the specific reaction product and the color changes are produced.

6. Apparatus for detecting the defrosting and the relative conservation states of perishable products, based on the physical properties of water, on the proportional relation that exists between the temperature and the chemical reaction rate, as well as on the property of gases, characterized in that it is comprised of two hollow bodies (39, 40), in contact with each other, one of which (39) contains a portion of water (41) totally packaged by a product not very resistant to breaking and somewhat seprated several independent reagents (43), while the other body (40) is comprised of a small contrasted tube, with an indicative ram (44) ram inside it, the water being able to contain some dissolved substance; once this apparatus is attached to the product to be controlled, in the freezing process, upon the volume of the water increasing due to freezing, the partial breaking of the package (41) is produced and as the temperature rises and the ice melts, the interaction of the reagents (43) is produced producing a gaseous element that as the volume increases displaces the indicative ram (44), it sufficing to look at the contrast mark that the ram indicates, to know the relative conservation time, according to the method.

FIG.1

FIG.2

FIG.3

FIG.4

FIG.5

**A. CLASSIFICATION OF SUBJECT MATTER**
IPC 5   G01K11/06    G01K3/04

According to International Patent Classification (IPC) or to both national classification and IPC

**B. FIELDS SEARCHED**

Minimum documentation searched (classification system followed by classification symbols)
IPC 5   G01K

Documentation searched other than minimum documentation to the extent that such documents are included in the fields searched

Electronic data base consulted during the international search (name of data base and, where practical, search terms used)

**C. DOCUMENTS CONSIDERED TO BE RELEVANT**

| Category* | Citation of document, with indication, where appropriate, of the relevant passages | Relevant to claim No. |
|---|---|---|
| X | US,A,4 148 272 (P.W. WETZOLD) 10 April 1979<br>see title;<br>see column 1, line 66 - column 2, line 63;<br>figures 1-3<br>--- | 1,5,6 |
| X | GB,A,2 051 361 (F.SALA) 14 January 1981<br>see title;<br>see page 3, line 4 - page 3, line 75;<br>figures 1-4,6<br>see page 3, line 90 - page 3, line 103<br>--- | 1,2,5,6 |
| X | GB,A,2 225 425 (S.F. HALLIN) 30 May 1990<br>see the whole document; | 1,3,4 |
| X | US,A,4 038 936 (J.R. KESSLER) 2 August 1977<br>see the whole document; | 1,3 |

☐ Further documents are listed in the continuation of box C.    ☒ Patent family members are listed in annex.

* Special categories of cited documents :

"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art.
"&" document member of the same patent family

| Date of the actual completion of the international search | Date of mailing of the international search report |
|---|---|
| 1 August 1994 | 03. 08. 94 |

| Name and mailing address of the ISA<br>European Patent Office, P.B. 5818 Patentlaan 2<br>NL - 2280 HV Rijswijk<br>Tel. (+31-70) 340-2040, Tx. 31 651 epo nl,<br>Fax (+31-70) 340-3016 | Authorized officer<br><br>Visser, F |

| Patent document cited in search report | Publication date | Patent family member(s) | | Publication date |
|---|---|---|---|---|
| US-A-4148272 | 10-04-79 | NONE | | |
| GB-A-2051361 | 14-01-81 | AU-A- | 5914080 | 11-12-80 |
| | | BE-A- | 883718 | 01-10-80 |
| | | CA-A- | 1153254 | 06-09-83 |
| | | CH-A- | 642746 | 30-04-84 |
| | | DE-A- | 3021582 | 18-12-80 |
| | | FR-A,B | 2458801 | 02-01-81 |
| | | JP-A- | 56001322 | 09-01-81 |
| | | NL-A- | 8003314 | 10-12-80 |
| | | SE-A- | 8004262 | 09-12-80 |
| | | US-A- | 4280361 | 28-07-81 |
| GB-A-2225425 | 30-05-90 | NONE | | |
| US-A-4038936 | 02-08-77 | NONE | | |